Europäisches Patentamt

(19) European Patent Office

Office européen des brevets

(11) Publication number: **0 082 653**
**B1**

(12) **EUROPEAN PATENT SPECIFICATION**

(45) Date of publication of patent specification: **13.08.86**

(21) Application number: **82306622.0**

(22) Date of filing: **10.12.82**

(51) Int. Cl.⁴: **A 01 G 9/10**

(54) **Plant pot and process for its manufacture.**

(30) Priority: **11.12.81 GB 8137556**

(43) Date of publication of application:
**29.06.83 Bulletin 83/26**

(45) Publication of the grant of the patent:
**13.08.86 Bulletin 86/33**

(84) Designated Contracting States:
**AT BE DE FR GB IT NL SE**

(56) References cited:
**DE-A-1 611 734**
**DE-A-2 813 059**
**FR-A-2 442 809**

(73) Proprietor: **The Wiggins Teape Group Limited**
**P.O. Box 88 Gateway House Basing View**
**Basingstoke Hampshire RG21 2EE (GB)**

(72) Inventor: **Drew, Quentin Miles**
**14 Spurway Road**
**Tiverton Devon, EX16 4ES (GB)**

(74) Representative: **Norris, Richard John et al**
**The Wiggins Teape Group Limited Group**
**Patents Departement Butlers Court**
**Beaconsfield Buckinghamshire HP9 1RT (GB)**

**0 082 653**

**Description**

This invention relates to plant pots of the type which are used to germinate seedlings, cuttings or the like and then disintegrate once they have been planted out.

Such a plant pot must possess sufficient strength to support the soil, compost or other growing medium of the plant from its initial sowing to planting out. The growing medium may be continually wet, and so the pot must be sufficiently water-resistant to prevent disintegration and allow handling prior to planting out. The plant pot should be easy to fill and preferably should be slightly tapered to allow access of air to the roots through the pot walls when the pots are side by side on a germinating tray. Tapering also facilitates stacking of the pots prior to filling with growing medium.

Various materials have previously been used for making such plant pots, for example peat, bitumenised kraft paper board, black polythene and foamed polystyrene. However none of these are free from disadvantages. Plant pots constructed from foamed polystyrene or black polythene are impermeable to air, moisture and roots and must be removed before planting out since they will not disintegrate to an adequate extent. Another problem with foamed polystyrene is that it may transmit more light to the roots than is acceptable, whilst black polythene plant pots are too flimsy to fill easily. Plant pots constructed from bitumenised kraft paper board tend to lack strength, do not disintegrate properly and require slits to be cut in the pot wall to facilitate drainage. Peat pots are fragile, particularly when dry and cannot easily be made in large sizes.

It is an object of the invention to obviate or at least reduce the aforementioned disadvantages. It has been proposed in DT—A—1611734 to manufacture decomposable containers for plants by applying synthetic thermoplastic material to a decomposable fibrous material, particularly cellulose-containing fibrous material, comminuting the product so obtained, mixing with water to form a pulp, draining the pulp while press-moulding it into container shapes, and drying the containers so formed at temperatures ranging from 100—250°C.

It has now surprisingly been found that plant pots having excellent properties may be formed from a paper web made from a heat-bonded blend of fibres of vegetable origin and synthetic thermoplastic fibres. This approach avoids the necessity in the proposal according to DT—A—1611734 for the step of applying the synthetic thermoplastic material to the fibrous material and for a subsequent comminution step, both of which lead to increased expense.

In a first aspect therefore, the present invention resides in a plant pot formed from a root penetrable heat bonded paper web comprising a blend of fibres of vegetable origin and synthetic thermoplastic fibres.

In a second aspect the present invention resides in a process for the manufacture of plant pots comprising the steps of forming a paper web from a blend of fibres of vegetable origin and synthetic thermoplastic fibres, heating the web thus formed to a temperature at which heat bonding occurs and forming the resultant heat-bonded web into a plant pot.

The synthetic thermoplastic fibres may be of a variety of thermoplastic materials for example polyolefins such as polyethylene and polypropylene, polyvinyl chloride, polyvinyl alcohol and polyesters. Polyethylene fibres have so far been found to be preferred. The polyolefin fibres used should desirably be of the kind specially produced for use in paper making and usually known in the paper industry as synthetic wood pulp fibres. However chopped staple fibres may be used. Suitable synthetic wood pulp fibres are for example the polyethylene fibres marketed under the names "Pulpex" by Hercules, "SWP" by Crown Zellerbach and "Ferlosa" by Montedison ("Pulpex" fibres were formerly marketed by Solvay). The synthetic thermoplastic fibres may carry a loading of clay or other mineral.

The fibres of vegetable origin may be of any of the cellulose pulps commonly used in paper making, for example unbleached kraft or bleached kraft pulp, optionally mixed with bark and/or peat fibres.

Preferably the synthetic thermoplastic fibres are present in an amount of between 15 and 50% of the total fibre content (the remaining 85 to 50% being fibres of vegetable origin), as pots with a synthetic content below 15% tend not to withstand repeated handling before planting out and excessive synthetic content leads to increased expense without any commensurate improvement in performance. The amount of thermoplastic fibre used is more preferably between 15 and 30% by weight of the total fibre content. A synthetic thermoplastic fibre content of 25% is particularly suitable.

The temperature at which heat bonding of the paper from which the plant pot is made is effected is preferably 130—150°C in the case of polyethylene fibres and 90—100°C in the case of polyvinylalcohol fibres.

The paper from which the plant pots are made may be made on conventional papermaking equipment, for example a Fourdrinier papermachine, using foamed or unfoamed stock.

The paper from which the plant pot is made may be treated with fungicide to prevent mould growth but since some fungicides tend to inhibit root growth, care must be taken with regard to the amount used. Typically about 0.5 to 1.0% is suitable. The fungicide is conveniently incorporated in the web during or shortly after its formation, and prior to formation of the pot.

The paper from which the plant pot is made may be dyed if desired. Again care must be taken with the type and amount of dye used because some types of dye may kill the roots or at least inhibit root growth.

Preferably the plant pot is formed on conventional paper cup or bag making machinery, the presence of synthetic thermoplastic fibres enabling the product to be heat sealed into shape if necessary.

2

The total grammage of the paper from which the plant pot is formed is preferably in the range between 50 and 250 $gm^{-2}$ and more preferably between 60 and 120 $gm^{-2}$. It is conveniently about 100 $gm^{-2}$.

To facilitate root penetration it is preferable that the burst strength of the heat bonded paper is between 40 and 200 kPa and is more preferably between 80 and 100 kPa.

For the same reason, it is also preferable that the porosity of the paper is reasonably high. Air resistance is used to measure porosity and is preferably between 6 and 30 mm W.G. (at a face velocity of 20 m $min^{-1}$) and is more preferably between 8 and 15 mm W.G. (at a face velocity of 20 m $min^{-1}$).

Whilst the ranges of burst strength and air resistance values quoted above are generally applicable, it may in practice be found difficult with certain plants to achieve adequate root penetration if both the burst strength and air resistance are towards the top end of their respective ranges. Moreover, if a fungicide is used which has the effect of inhibiting root growth, adequate root penetration may not be achieved even with a very low air resistance, if the burst strength is towards the high end of the preferred range. The selection of a suitable blend of properties should not however prove difficult, although a certain amount of preliminary testing may be necessary. Guidance as to suitable paper characteristics is of course available from the Examples set out below.

The present plant pot may if desired be perforated in order to increase its root penetrability, although this is not essential for adequate performance. Perforation does however offer the possibility of imparting acceptable root penetrability to a material which would otherwise be inadequate in this respect.

Perforation of the plant pot paper may for example be achieved by mechanical means or by spark perforation before the paper is formed into a plant pot but after the paper web has been heat-bonded.

Mechanical perforation may be achieved in a generally conventional manner, for example by passing the plant pot paper between a perforating roll, i.e. a roll having probes, spikes, needles or other perforating members, about its circumference, and a backing roll. Alternatively mechanical perforation may be achieved by puncturing the plant pot paper with a perforating member, such as a small probe or needle, in a random manner.

Spark perforation may be achieved in the manner set out in our GB—A—2079212. The paper to be perforated is passed between a series of electrodes which emit sparks causing perforations in the material. The apparatus for carrying out the spark perforation of a sheet material comprises spaced apart first and second electrodes which define between them a sparking zone through which the sheet material to be perforated can be moved in a predetermined direction.

An alternative method of spark perforation is described in our GB—A—2079211 in which the paper to be spark perforated is passed between the electrodes of a rotary electrode assembly and a suitably juxtapositioned earthed surface. The rotary assembly has a first set of annular electrodes which are connected to a suitable power source, and a second set of annular electrodes of greater external diameter than the first set which alternate with the first set. A dielectric material spaces the electrodes to form a series of parallel capacitors.

The pore diameter achieved by spark perforation is typically from 80 to 200 μm, whilst the pore diameter achieved by mechanical perforation is typically 500 μm.

Example 1

A range of sheets of paper of similar grammage (100±5 $gm^{-2}$) having different thicknesses, burst strengths and air resistance were made on a laboratory sheet making machine using a furnish made up of different blends of cellulose and "Pulpex" polyethylene fibres.

These sheets were then placed in an oven at a temperature of 130°C to heat bond the synthetic thermoplastic fibres.

Plant pots of conical shape were then formed from the sheets by hand.

The pots were filled with a potting compost and two peas were placed in each pot. The seeds were watered in and a daily check and record made of the first signs of germination. As the seedlings progressed, examinations for root penetration were also carried out. Three pots of each type of material were used. All growing was carried out indoors using a technique which allowed a visible assessment of root penetration to be made without complete removal of the growing medium. This involved placing the plant pots with their tops touching in a seed tray and the edges of the tray were covered to allow little or no light to the lower half of the plant pots. Growth was continued for a period of 2 months.

The results are shown in Table 1.

TABLE 1

SWP=Synthetic wood pulp

|  | A | B | C |
|---|---|---|---|
| Furnish | 25% SWP<br><br>75% unbleached Kraft | 25% SWP<br><br>75% unbleached Kraft<br><br>1% Fungicide | 25% SWP<br><br>50% unbleached Kraft<br><br>25% Bark fibre |
| Thickness μm | 525 | 475 | 510 |
| Tensile N/15 mm | 17.5 | 18.0 | 11.0 |
| Tear mN | 930 | 1260 | 525 |
| Burst kPa | 120 | 110 | 75 |
| Air resistance mm W.G. | 37 | 36 | 14.9 |
| Comments on root penetration | Roots potbound | Roots potbound | Good root penetration |

TABLE 1 (continued)

|  | D | E | F |
|---|---|---|---|
| Furnish | 25% SWP<br><br>25% unbleached Kraft<br><br>50% Bark fibre | 25% SWP<br><br>50% unbleached Kraft<br><br>25% bleached Kraft | 25% SWP<br><br>25% unbleached Kraft<br><br>50% bleached Kraft |
| Thickness μm | 580 | 520 | 520 |
| Tensile N/15 mm | 10.5 | 15.0 | 17.0 |
| Tear mN | 690 | 975 | 1050 |
| Burst kPa | 80 | 175 | 75 |
| Air resistance mm W.G. | 10.2 | 17.5 | 14.5 |
| Comments on root penetration | Good root penetration | Roots potbound | Good root penetration |

# 0 082 653

TABLE 1 (continued)

|  | G | H | I |
|---|---|---|---|
| Furnish | 25% SWP<br><br>75% bleached Kraft | 25% SWP<br><br>75% bleached Kraft<br><br>1% Fungicide | 50% SWP<br><br>50% unbleached Kraft |
| Thickness μm | 510 | 510 | 540 |
| Tensile N/15 mm | 14.5 | 15.0 | 20 |
| Tear mN | 1110 | 1140 | 1065 |
| Burst kPa | 90 | 90 | 170 |
| Air resistance mm W.G. | 11.8 | 12.0 | 4.8 |
| Comments on root penetration | Good root penetration | Good root penetration only slightly worse than without fungicide | Some root penetration, equal quantity inside and outside pot |

TABLE 1 (continued)

|  | J | K |
|---|---|---|
| Furnish | 50% SWP<br><br>50% unbleached Kraft<br><br>1% Fungicide | 50% SWP<br><br>10% bleached Kraft<br><br>40% unbleached Kraft |
| Thickness μm | 540 | 530 |
| Tensile N/15 mm | 22 | 20.0 |
| Tear mN | 1110 | 1195 |
| Burst kPa | 160 | 130 |
| Air resistance mm W.G. | 5.0 | 12.0 |
| Comments on root penetration | Roots potbound | Some root penetration, equal quantity inside and outside pot |

Both pots A and B have not allowed root penetration. In both these cases the porosity, as measured by the air resistance is well outside the preferred range. Pots C, D, F, G, H and K have allowed good root penetration. In these pots the porosity and burst strength are well within the preferred range. Pot I has also allowed good root penetration despite having a fairly high burst strength. The fairly high burst strength was probably counteracted by the high porosity. Pot J although having similar physical characteristics to Pot I has remained potbound, probably due to the presence of fungicide. Pot E has remained potbound although both burst strength and porosity are within the preferred ranges. This was probably because both the porosity and the burst strength are towards the high end of these ranges.

5

Example 2

This example illustrates the use of papers of varying grammage in the present invention.

Sheets of paper having grammages of $60\pm5$ gm$^{-2}$, $70\pm5$ gm$^{-2}$, $80\pm5$ gm$^{-2}$ and $100\pm5$ gm$^{-2}$ were made on conventional papermaking machinery using a furnish made up of a blend of 64% bleached kraft fibre, 14% unbleached kraft fibre and 22% synthetic wood pulp.

These sheets were then heat bonded, formed into plant pots and tested for root penetration as described in Example 1. Additionally the biomass of the germinating seedlings was measured. Biomass is the weight of vegetation above the growing medium and thus provides a quantitative indication of growth.

The results are shown in Table 2A

TABLE 2A

| Furnish | 64% bleached Kraft<br>14% unbleached Kraft<br>22% SWP | | | |
|---|---|---|---|---|
| Grammage gm$^{-2}$ | 60.65 | 69.65 | 106 | 85 |
| Thickness μm | 273.5 | 310 | 465 | 357 |
| Tensile N/15 | 14 | 13.25 | 20 | 17.0 |
| Air resistance mm W.G. | 11.75 | 13.4 | 19.7 | 13.3 |
| Max. pore diameter μm | 105.75 | 96.65 | 104 | 116 |
| Burst kPa | 57.5 | 53.5 | 65 | 60 |
| Comments on root penetration | good through base and wall | good through base and wall | very good through base and wall | very good through base and wall |
| Biomass | 3.186 | 3.281 | 3.518 | 3.548 |
| Visual assessment of root penetration compared with conventional peat plant pots | Better | Better | Better | Better |

In all cases the plant pots exhibited good handleability.

The sheets of paper of grammage $100\pm5$ gm$^{-2}$ and $80\pm5$ gm$^{-2}$ were also converted into plant pots using conventional production scale paper cup making machinery.

The results are shown in Table 2B (the physical properties of the papers converted were the same as those shown in Table 2A).

TABLE 2B

| Furnish | 64% bleached Kraft 14% unbleached Kraft 22% SWP | |
|---|---|---|
| Grammage gm$^{-2}$ | 106 | 85 |
| Comments on root penetration | Good through base and wall | Good through base and wall |
| Biomass | 3.334 | 3.542 |
| Visual assessment of root penetration compared with conventional peat plant pots | Equivalent | Slightly better |

Example 3

This example demonstrates the use of an alternative synthetic thermoplastic fibre to polyethylene. Sheets of paper having a grammage of 100 gm$^{-2}$ were made on a laboratory sheet making machine using a furnish of a blend of 64% bleached Kraft fibres, 14% unbleached Kraft fibres and 22% poly(vinylalcohol) fibres, (those supplied as Mewlon SML by Unitakasei Ltd.) The sheets were then heat bonded at a temperature of 90—100°C and formed into plant pots and tested for root penetration as described in Example 1. The results are shown in Table 3.

TABLE 3

| Furnish | 64% bleached Kraft 14% unbleached Kraft 22% PVOH fibre |
|---|---|
| Grammage gm$^{-2}$ | 100 |
| thickness μm | 510 |
| tensile N/15 mm | 24.5 |
| Burst kPa | 175 |
| Air resistance mm W.G. | 7.3 |
| Max. pore diameter μm | 119 |
| Tear mN | 2310 |
| Comments on root penetration | Very good through base and wall |
| Biomass | 3.113 |
| Visual assessment of root penetration compared with conventional peat plant pots | Better |

Example 4

This example demonstrates the use of smaller proportions of polyethylene fibres than were used in Example 1.

Sheets of paper having a grammage of 100±5 gm$^{-2}$ were made on a laboratory sheet making machine using a variety of furnishes containing decreasing amounts of synthetic thermoplastic fibres (those supplied as Pulpex E Type A by Hercules). The sheets were then heat bonded and formed into plant pots and tested for root penetration as described in Example 1. The results are shown in Table 4.

TABLE 4

| Furnish | 70% bleached Kraft 15% unbleached Kraft 15% SWP | 74% bleached Kraft 16% unbleached Kraft 10% SWP | 78% bleached Kraft 17% unbleached Kraft 5% SWP |
|---|---|---|---|
| Grammage $gm^{-2}$ | 103 | 105 | 102 |
| Thickness μm | 490 | 510 | 510 |
| Tensile N/15 mm | 8.0 | 7.5 | 3.5 |
| Burst kPa | 72 | 47 | 33 |
| Air resistance mm W.G. | 14.6 | 12.0 | 6.8 |
| Max. pore diam μm | 109 | 115 | 117 |
| Tear mN | 810 | 420 | 210 |
| Comments on root penetration | Very good through base and wall | Very good through base and wall | Very good through base and wall |
| Biomass | 3.290 | 3.352 | 3.148 |
| Visual assessment of root penetration compared with conventional peat plant pots | Better | Better | Better |

The plant pots containing 15% SWP exhibited better handleability than those containing 10% and 5% SWP.

Example 5

This example demonstrates the use of a major proportion of peat fibres in the paper from which the pot is made.

Sheets of paper having a grammage of $100\pm5$ $gm^{-2}$ were made on a laboratory sheet making machine. These sheets were then heat bonded and made into plant pots and tested for root penetration as described in Example 1. The results are shown in Table 5.

8

TABLE 5

| Furnish | 64% Irish Sphagnum moss 14% unbleached kraft 22% SWP |
|---|---|
| Grammage $gm^{-2}$ | 102 |
| Thickness μm | 590 |
| Tensile N/15 mm | 3.5 |
| Burst kPa | 28 |
| Air resistance mm W.G. | 54.0 |
| Max. pore diam. μm | 111 |
| Tear mN | 300 |
| Comments on root penetration | Good through base and wall |
| Biomass | 3.211 |
| Visual assessment of root penetration compared with conventional peat plant pots | Equivalent |

The plant pots exhibited good handleability.

Example 6

A range of sheets of paper of similar grammage (100±5 $gm^{-2}$) having different thicknesses, burst strengths and air resistance were made on a laboratory sheet making machine using a blend of 80% unbleached Kraft fibres and 20% synthetic thermoplastic fibres (those supplied as Pulpex E Type A by Hercules). These sheets were then placed in an oven at a temperature of 130°C to heat bond the synthetic fibres. The sheets were then spark perforated using the apparatus described in Figures 10 and 26 of our copending GB—A—2079212 at a voltage of 10,000 V and a current of 5.5 to 6 A. The perforated sheets were then formed into plant pots and tested for root penetration as described in Example 1. The results are shown in Table 6. The left-hand column lists the properties of a control in which the plant pot material was left unperforated.

# 0 082 653

TABLE 6

| Furnish | 80% unbleached kraft 20% SWP | |
|---|---|---|
| Web speed during spark perforation (m min$^{-1}$) | — | 25 |
| Spark gap (μm) | — | 890 |
| Grammage gm$^{-2}$ | 100 | 104 |
| Thickness μm | 540 | 535 |
| Burst kPa | 95 | 95 |
| Air resistance mm W.G. | 42 | 30 |
| Maximum pore diameter μm | 52.5 | 162 |
| Tensile N/15 mm | 15.5 | 15 |
| Comments on root penetration | Pot bound | Good through base and wall |
| Biomass g (mean value) | 2.533 | 3.231 |
| Visual assessment of root penetration compared with conventional peat plant pots | None | Better |

It will be seen that the plant pot which was not spark perforated remained pot bound. This is thought to be due to a low porosity and high burst strength. By spark perforating the material a plant pot with improved porosity is obtained allowing root penetration to occur. In both cases the durability of the plant pots i.e. their ability to withstand repeated handling was good.

Example 7

A range of sheets of paper of similar grammage (100±5 gm$^{-2}$) having different thicknesses, burst strengths and air resistance were made using a furnish of:—

1) 64% bleached kraft
   14% unbleached kraft
   22% synthetic woodpulp ("Pulpex E")
2) 80% unbleached kraft
   20% synthetic woodpulp ("Pulpex E")

These sheets were then subject to mechanical perforation instead of spark perforation. Mechanical perforation was achieved by randomly puncturing the plant pot material with a metal probe. The material was then formed into plant pots and tested for root penetration as described in Example 1. The results are shown in Table 7.

10

TABLE 7

| Furnish | 64% Bleached Kraft 14% unbleached Kraft 22% SWP | 80% unbleached Kraft 20% SWP |
|---|---|---|
| Grammage $gm^{-2}$ | 98 | 100 |
| Thickness μm | 410 | 540 |
| Burst kPa | 70 | 95 |
| Air resistance mm W.G. | 24 | 42 |
| Max. pore diam. μm | 500 | 500 |
| Tensile N/15 mm | 13 | 15.5 |
| Comments on root penetration | Good through base and wall | Good through base and wall |
| Biomass | 3.207 | 3.521 |
| Visual assessment of Root Penetration compared with conventional peat plant pots | Better | Better |

In both cases the handleability of the plant pots was good.

Example 8

A range of sheets of paper having different physical properties were made on conventional papermaking machinery from furnishes of different blends of cellulose and synthetic wood pulp fibres. The paper web was then heat bonded and spark perforated prior to being formed into plant pots as described in Example 5. The plant pots were then filled with growing medium into which seedlings were planted and the degree of root penetration observed as described in Example 1. The results are shown in Table 7. It will be seen that the web speed and the spark gap must be properly chosen if adequate perforation, and hence adequate root penetrability, are to be achieved.

TABLE 8

| Furnish | 64% Bleached Kraft 14% unbleached Kraft 22% SWP | | | 80% bleached Kraft 20% SWP | | |
|---|---|---|---|---|---|---|
| Web speed during spark perforation (mmin⁻¹) | — | 25 | 55 | — | 35 | 15 |
| Spark gap μm | — | 890 | 1145 | — | 1145 | 710 |
| Grammage gm⁻² | 98 | 98 | 101 | 119 | 122 | 121 |
| Thickness μm | 410 | 415 | 410 | 290 | 295 | 300 |
| Burst kPa | 70 | 70 | 70 | 107 | 110 | 105 |
| Air resistance mm W.G. | 24 | 16 | 18 | 298 | 250 | 241 |
| Max. pore diam μm | 81.5 | 198 | 110 | 25.8 | 52 | 120 |
| Tensile N/15 mm | 13 | 14 | 14 | 42 | 40 | 38 |
| Comments on root penetration | slight through seam none through wall and base | good through base and wall | good through base and wall | only through seam | mainly through seam one penetrated wall | good through base and wall |
| Biomass | 3.107 | 3.908 | 3.367 | 2.288 | 3.117 | 3.293 |
| Visual assessment of root penetration compared with conventional peat plant pots | Worse | Better | Similar | Worse | More root but only though seam | Better |

**Claims**

1. A plant pot formed from a root penetratable heat bonded paper web comprising a blend of fibres of vegetable origin and synthetic thermoplastic fibres.

2. A plant pot as claimed in claim 1 characterized in that the synthetic thermoplastic fibres are present in an amount from 15 to 50%, more preferably 15 to 30% by weight of the total fibre content of the paper.

3. A plant pot as claimed in any one of the preceding claims characterized in that the synthetic thermoplastic fibres are polyolefin fibres.

4. A plant pot as claimed in any preceding claim characterized in that the fibres of vegetable origin are cellulose pulp fibres, optionally mixed with bark and/or peat fibres.

5. A plant pot as claimed in claim 4 characterized in that the cellulose pulp fibres are unbleached and/or bleached kraft fibres.

6. A plant pot as claimed in any preceding claim characterized in that the total grammage of the paper forming the plant pot is in the range 50 to 250 gm⁻², more preferably 60 to 120 gm⁻².

7. A plant pot as claimed in any preceding claim characterized in that the burst strength of the paper forming the plant pot is 40 to 200 kPa and the air resistance is 6 to 30 mm W.G. at a face velocity of 20 m min⁻¹.

8. A plant pot as claimed in claim 7 characterized in that the burst strength of the paper forming the plant pot is 80 to 100 KPa and the air resistance is 8 to 15 mm W.G. at a face velocity of 20 m min⁻¹.

9. A plant pot as claimed in any preceding claim characterized in that the heat bonded paper web is perforated.

10. A process for the manufacture of plant pots comprising the steps of forming a paper web from a blend of fibres of vegetable origin and synthetic thermoplastic fibres, heating the web thus formed to a temperature at which heat-bonding occurs and forming the resultant heat-bonded web into a plant pot.

11. A process as claimed in claim 10, characterized in that the paper web is as defined in any of claims 2 to 8.

12

12. A process as claimed in claim 10 characterized in that after the web has been heated to a temperature at which heat-bonding occurs it is perforated prior to forming the heat-bonded web into a plant pot.

**Patentansprüche**

1. Pflanzentopf, der von einer hitzegebundenen Papierbahn gebildet wird, in welche Wurzeln eindringen können und welche aus einer Mischung von Fasern pflanzlichen Ursprungs und synthetischen thermoplastischen Fasern besteht.

2. Pflanzentopf nach Anspruch 1, dadurch gekennzeichnet, daß die synthetischen thermoplastischen Fasern in einem Anteil von 15 bis 50 Gew.%, bevorzugt 15 bis 30 Gew.% des Gesamtfasergehalts des Papiers vorliegen.

3. Pflanzentopf nach einem der vorhergehenden Ansprüche, dadurch gekennzeichnet, daß die synthetischen thermoplastischen Fasern Polyolefinfasern sind.

4. Pflanzentopf nach einem der vorhergehenden Ansprüche, dadurch gekennzeichnet, daß die Fasern pflanzlichen Ursprungs Zellulosebreifasern sind, die ggfs. mit Rinden- und/oder Torffasern vermischt sind.

5. Pflanzentopf nach Anspruch 4, dadurch gekennzeichnet, daß die Zellulosebreifasern ungebleichte und/oder gebleichte Packpapierfasern sind.

6. Pflanzentopf nach einem der vorhergehenden Ansprüche, dadurch gekennzeichnet, daß das Gesamtflächengewicht des den Pflanzentopf bildenden Papiers im Bereich zwischen 50 bis 250 gm$^{-2}$, bevorzugt im Bereich von 60 bis 120 gm$^{-2}$ liegt.

7. Pflanzentopf nach einem der vorhergehenden Ansprüche, dadurch gekennzeichnet, daß die Berstfestigkeit des den Pflanzentopf bildenden Papiers 40 bis 200 kPa und der Luftwiderstand 6 bis 30 mmWS bei einer Flächengeschwindigkeit von 20 m min$^{-1}$ beträgt.

8. Pflanzentopf nach Anspruch 7, dadurch gekennzeichnet, daß die Berstfestigkeit des den Plfanzentopf bildenden Papiers 80 bis 100 kPa und der Luftwiderstand 8 bis 15 mmWS bei einer Flächengeschwindigkeit von 20 m min$^{-1}$ beträgt.

9. Pflanzentopf nach einem der vorhergehenden Ansprüche, dadurch gekennzeichnet, daß das hitzegebundene Papier der Papierbahn perforiert ist.

10. Verfahren zur Herstellung eines Pflanzentopfs, bestehend aus den Schritten des Herstellens einer Papierbahn aus einer Mischung von Fasern pflanzlichen Ursprungs und synthetischen thermoplastischen Fasern, des Erhitzens der so gebildeten Bahn auf eine Temperatur bei welcher die Hitzebindung eintritt und des Formens der sich ergebenden hitzegebundenen Bahn in einen Pflanzentopf.

11. Verfahren nach Anspruch 10, dadurch gekennzeichnet, daß die Papierbahn durch einen der Ansprüche 2 bis 8 definiert ist.

12. Verfahren nach Anspruch 10, dadurch gekennzeichnet, daß nachdem die Bahn auf eine Temperatur erhitzt wurde, bei welcher die Hitzebindung eintritt, diese perforiert wird, bevor die hitzegebundene Bahn zu einem Pflanzentopf geformt wird.

**Revendications**

1. Pot de plantes formé d'une nappe de papier thermiquement liée à travers laquelle peuvent pénétrer les racines et comprenant un mélange de fibres d'origine végétale et de fibres thermoplastiques synthétiques.

2. Pot de plantes suivant la revendication 1, caractérisé en ce que les fibres thermoplastiques synthétiques sont présentes à raison de 15 à 50%, de préférence de 15 à 30% du poids de la teneur totale en fibres du papier.

3. Pot de plantes suivant l'une quelconque des revendications précédentes, caractérisé en ce que les fibres thermoplastiques synthétiques sont des fibres polyoléfiniques.

4. Pot de plantes suivant l'une quelconque des revendications précédentes, caractérisé en ce que les fibres d'origine végétale sont des fibres de pâte de cellulose éventuellement mélangées à des fibres d'écorce et/ou de tourbe.

5. Pot de plantes suivant la revendication 4, caractérisé en ce que les fibres de pâte de cellulose sont des fibres kraft non blanchies et/ou blanchies.

6. Pot de plantes suivant l'une quelconque des revendications précédentes, caractérisé en ce que le grammage total du papier formant le pot de plantes est compris dans la gamme de 50 à 250 gr$^{-2}$, de préférence de 60 à 120 g.$^{-2}$.

7. Pot de plantes suivant l'une des revendications précédentes, caractérisé en ce que la résistance à l'éclatement du papier formant le pot de plantes est de 40 à 200 kPa et la résistance à l'air est de 6 à 30 mm de colonne d'eau à une vitesse faciale de 20 m. min$^{-1}$.

8. Pot de plantes suivant la revendication 7, caractérisé en ce que la résistance à l'éclatement de papier formant le pot de plantes est de 80 à 100 kPa et la résistance à l'air est de 8 à 15 mm de colonne d'éau à une vitesse faciale de 20 m. min$^{-1}$.

9. Pot de plantes suivant l'une quelconque des revendications précédentes, caractérisé en ce que la nappe de papier thermiquement liée est perforée.

13

**0 082 653**

10. Procédé pour la fabrication de pots de plantes comprenant les phases consistant à former une nappe de papier à partir d'un mélange de fibres d'origine végétale et de fibres thermoplastiques synthétiques, à chauffer la nappe ainsi formée à une température à laquelle s'opère la liaison thermique et à transformer la nappe thermiquement liée obtenue en un pot de plantes.

11. Procédé suivant la revendication 10, caractérisé en ce que la nappe de papier est telle que définie dans l'une quelconque des revendications 2 à 8.

12. Procédé suivant la revendication 10, caractérisé en ce que, après chauffage de la nappe à une température à laquelle s'opère la liaison thermique, elle est perforée avant transformation de la nappe liée thermiquement en un pot de plantes.

14